# EUROPÄISCHE PATENTSCHRIFT

(11) **EP 2 920 213 B1**
(45) Veröffentlichungstag und Bekanntmachung des Hinweises auf die Patenterteilung: **04.05.2016**
(21) Anmeldenummer: 13789805.2
(22) Anmeldetag: 13.11.2013
(51) Int. Cl.: C08F 2/22, C08K 5/053, C09J 11/08, C08F 2/30, C08F 218/08, C08F 212/08, C08F 220/18, C08F 210/02

(54) **VERFAHREN ZUR HERSTELLUNG VON POLYVINYLALKOHOL-STABILISIERTEN POLYMERISATEN MITTELS EMULSIONSPOLYMERISATION**
PROCESS FOR PREPARING POLYVINYL ALCOHOL-STABILIZED POLYMERS BY MEANS OF EMULSION POLYMERIZATION
PROCÉDÉS DE PRODUCTION DE POLYMÈRES STABILISÉS À L'ALCOOL POLYVINYLIQUE PAR POLYMÉRISATION EN ÉMULSION

(30) Priorität: 14.11.2012 DE 102012220776
(43) Veröffentlichungstag der Anmeldung: 23.09.2015
(73) Patentinhaber: Wacker Chemie AG, 81737 München (DE)
(72) Erfinder: BAUERS, Florian, 84489 Burghausen (DE); SCHRÖGEL, Pamela, 84561 Mehring (DE)
(74) Vertreter: Ege, Markus
(86) Internationale Anmeldenummer: PCT/EP2013/073766
(87) Internationale Veröffentlichungsnummer: WO 2014/076154

(56) Entgegenhaltungen:
- EP-A1- 1 174 446
- WO-A1-2013/021234
- DE-A1- 4 431 343

## Beschreibung

Die vorliegende Erfindung betrifft Verfahren zur Herstellung von Polyvinylalkohol-stabilisierten Polymerisaten mittels radikalisch initiierter Emulsionspolymerisation von ethylenisch ungesättigten Monomeren, so erhältliche Produkte sowie deren Verwendung beispielsweise als Beschichtungs- oder Klebemittel, insbesondere als Additiv für Holzleim oder Papierklebstoffe oder als Klebstoff für sonstige Verpackungsmaterialien.

Polyvinylalkohol-stabilisierte Emulsionspolymerisate werden vielfach in Beschichtungsmitteln oder Klebemitteln eingesetzt. So beschreibt die GB2089355 Papierklebstoffe auf Basis von Polyvinylacetat, das mittels Polyvinylalkoholen mit einem Polymerisationsgrad von 200 bis 800 stabilisiert ist. Zur Reduzierung des Wasseraufnahmevermögens von Beschichtungsmassen empfiehlt EP0671420 den Zusatz von Polyacrylaten mit bestimmter Monomerzusammensetzung.

Die US5376747 befasst sich dagegen mit der Suspensionspolymerisation von Vinylchlorid, wobei Polyvinylalkohol vor und während der Polymerisation zugegeben wird.

Problematischerweise kommt es während der Emulsionspolymerisation in Gegenwart von Polyvinylalkoholen mit einem Hydrolysegrad von ≥ 92 Mol-% häufig zur unerwünschten Agglomeration von Polymerisationsprodukten und folglich zur vermehrten Bildung von Dispersionen mit hohem Grobanteil oder hoher Viskosität, bis hin zur Dilatanz entsprechender Polymerdispersionen. Zur Vermeidung von Agglomerationsprozessen werden unterschiedliche Maßnahmen empfohlen. So lehrt die WO2010/097340, bei der Emulsionspolymerisation neben Polyvinylalkoholen zusätzlich nichtionische, ethoxylierte Emulgatoren einzusetzen und die Monomere bzw. die Emulgatoren auf definierte Weise vorzulegen bzw. zuzudosieren. Die Emulsionspolymerisate finden Anwendung als Adhäsive. Die EP0224169 empfiehlt, die Schutzkolloide zu geringem Anteil vorzulegen und die verbleibende Schutzkolloidmenge über die Polymerisationsdauer verteilt zuzugeben. Zur Herstellung von Polymerdispersionen mit erhöhtem Feststoffgehalt und niedriger Viskosität lehrt die DE3227090, die Schutzkolloide erst nach bestimmten Umsatzraten der Monomere zuzudosieren. Die EP0062106 beschreibt feinteilige Dispersionen von Polymeren, die im Wesentlichen auf (Meth)acrylsäureestern oder Styrol basieren.

Vor diesem Hintergrund bestand die Aufgabe, Maßnahmen bereitzustellen, mit denen die Agglomeration von Polymerisationsprodukten während der Emulsionspolymerisation von ethylenisch ungesättigten Monomeren in Gegenwart von Polyvinylalkoholen mit einem Hydrolysegrad von ≥ 92 Mol-% zurückgedrängt werden kann. Zudem sollten die so erhältlichen Polymere bei Einsatz in Beschichtungs- oder Klebemitteln, insbesondere in Holzleim, eine Steigerung der Wasserfestigkeit bewirken.

Überraschenderweise wurde die Aufgabe dadurch gelöst, dass zumindest ein Teil der Polyvinylalkohole mit einem Hydrolysegrad von ≥ 92 Mol-% während der Emulsionspolymerisation mittels Stoßdosierung zugegeben wurde. Der Begriff Stoßdosierung ist dem Fachmann geläufig und bezeichnet eine Dosierung, bei der eine zu dosierende Komponente möglichst rasch, beispielsweise innerhalb einer so kurzen Zeitspanne wie technisch möglich, zudosiert wird. Die konkrete Zugabegeschwindigkeit bei der Stoßdosierung hängt von mehreren Parametern ab, wie beispielsweise von der Ansatzgröße, der Menge sowie der Viskosität der zu dosierenden Polyvinylalkohollösung oder des Fördervolumens einer Dosiervorrichtung. Bei Kenntnis dieser Randbedingungen kann der Fachmann die Zugabegeschwindigkeit für eine Stoßdosierung routinemäßig einstellen.

Gegenstand der Erfindung sind Verfahren zur Herstellung von Polyvinylalkohol-stabilisierten Polymerisaten mittels radikalisch initiierter Emulsionspolymerisation von einem oder mehreren ethylenisch ungesättigten Monomeren, dadurch gekennzeichnet, dass 40 bis 100 Gew.-% Polyvinylalkohole mit einem Hydrolysegrad von ≥ 92 Mol-%, bezogen auf das Gesamtgewicht der bei der Emulsionspolymerisation insgesamt eingesetzten Menge an Polyvinylalkohol, eingesetzt werden und
ein oder mehrere Polyvinylalkohole mit einem Hydrolysegrad von ≥ 92 Mol-% während der Emulsionspolymerisation mittels Stoßdosierung zudosiert werden,
wobei eine Stoßdosierung ≤ 3% der gesamten Dauer der Emulsionspolymerisation dauert.

Ein weiterer Gegenstand der Erfindung sind Polyvinylalkohol-stabilisierte Polymerisate erhältlich mittels radikalisch initiierter Emulsionspolymerisation von einem oder mehreren ethylenisch ungesättigten Monomeren, dadurch gekennzeichnet, dass während der Emulsionspolymerisation ein oder mehrere Polyvinylalkohole mit einem Hydrolysegrad von ≥ 92 Mol-% mittels Stoßdosierung zudosiert werden,
wobei eine Stoßdosierung ≤ 3% der gesamten Dauer der Emulsionspolymerisation dauert,
wobei die so erhältlichen Polyvinylalkohol-stabilisierten Polymerisate bei einem Feststoffgehalt von 50% in Wasser eine Viskosität von ≤ 40000 mPas (Bestimmung mit einem Brookfield Viskosimeter bei 20 Upm und 23°C) haben und durch einen Volumenanteil von Partikeln mit Partikeldurchmessern ≥ 2 µm von < 40 Vol.-% (Bestimmung nach ISO 13320 mit dem Messgerät Beckmann Coulter LS) charakterisiert sind sowie
40 bis 100 Gew.-% Polyvinylalkohole mit einem Hydrolysegrad von ≥ 92 Mol-%, bezogen auf das Gesamtgewicht der Polyvinylalkohole, und
einen Anteil an Partikeln mit Partikeldurchmessern von ≥ 50 µm zu ≤ 150 ppm enthalten.

Ethylenisch ungesättigte Monomere werden vorzugsweise ausgewählt aus der Gruppe umfassend Vinylester, (Meth)acrylsäureester, Vinylaromaten, Olefine, 1,3-Diene und Vinylhalogenide und gegebenenfalls weitere damit copolymerisierbare Monomere.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe der Ester der Acrylsäure oder Methacrylsäure sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0,05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat, Triallylisocyanurat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure-und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden ein oder mehrere Polymerisate hergestellt ausgewählt aus der Gruppe umfassend Vinylester-Homopolymerisate, Vinylester-Mischpolymerisate enthaltend eine oder mehrere Vinylester-Einheiten und ein oder mehrere Monomereinheiten aus der Gruppe umfassend Olefine, Vinylaromaten, Vinylhalogenide, Acrylsäureester, Methacrylsäureester, Fumar- und/oder Maleinsäuremono- oder -diester oder siliciumfunktionelle Comonomere; (Meth)acrylsäureester-Homopolymerisate oder (Meth)acrylsäureester-Mischpolymerisate enthaltend eine oder mehrere (Meth)-acrylsäureester-Einheiten und eine oder mehrere Monomereinheiten aus der Gruppe umfassend Olefine, Vinylaromaten, Vinylhalogenide, Fumar- und/oder Maleinsäuremono- oder -diester oder siliciumfunktionelle Comonomere; Homo- oder Mischpolymerisate von Dienen wie Butadien oder Isopren, sowie von Olefinen wie Ethen oder Propen, wobei die Diene beispielsweise mit Styrol, (Meth)-acrylsäureestern oder den Estern der Fumar- oder Maleinsäure copolymerisiert sein können; Homo- oder Mischpolymerisate von Vinylaromaten, wie Styrol, Methylstyrol, Vinyltoluol; Homo- oder Mischpolymerisate von Vinylhalogenverbindungen wie Vinylchlorid enthaltend eine oder mehrere Monomereinheiten aus der Gruppe umfassend Vinylester, Olefine und Methacrylsäureester, Acrylsäureester, wobei die Polymerisate noch Hilfsmonomere, vorzugsweise in den oben genannten Mengen, enthalten können.

Beispiele für bevorzugte Vinylester-Mischpolymerisate basieren auf 30 bis 90 Gew.-% an einem oder mehreren Vinylestern, 1 bis 40 Gew.-% Ethylen und gegebenenfalls 1 bis 40 Gew.-% an einem oder mehreren weiteren Comonomeren, bezogen auf das Gesamtgewicht der Monomere. Bei den weiteren Comonomeren handelt es sich vorzugsweise um die vorgenannten, von Vinylestern und Ethylen verschiedenen Monomere.

Bevorzugt werden auch Comonomergemische von Vinylacetat mit 1 bis 40 Gew.-% Ethylen; sowie Comonomermischungen von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und Gemische von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; sowie Gemische mit Vinylacetat, 1 bis 40 Gew.-% Ethylen und 1 bis 60 Gew.-% Vinylchlorid; wobei die Gemische noch die genannten Hilfsmonomere in den genannten Mengen enthalten können, und sich die Angaben in Gew.-% auf jeweils 100 Gew.-% aufaddieren.

Die Polyvinylalkohol-stabilisierten Polymerisate haben mittlere Partikeldurchmesser Dw von vorzugsweise 100 nm bis 10 µm, besonders bevorzugt 200 nm bis 5 µm und am meisten bevorzugt 500 nm bis 1,7 µm (bestimmt mit dem Messgerät Beckmann Coulter® LS nach ISO 13320).

Die nach dem erfindungsgemäßen Verfahren erhaltenen Produkte sind im Allgemeinen auch durch einen niedrigen Grobanteil charakterisiert. Der Volumenanteil der Polyvinylalkohol-stabilisierten Polymerisate mit Partikeldurchmessern ≥ 2 µm beträgt vorzugsweise < 40 Vol.-%, besonders bevorzugt < 35 Vol.-% und am meisten bevorzugt < 30 Vol.-%. Der Anteil von Partikeln mit einem Partikeldurchmesser von ≥ 40 µm beträgt vorzugsweise ≤ 1000 ppm und besonders bevorzugt ≤ 100 ppm. Der Anteil von Partikeln mit einem Partikeldurchmesser von ≥ 50 µm beträgt vorzugsweise ≤ 100 ppm. Der Anteil von Partikeln mit einem Partikeldurchmesser von ≥ 150 µm beträgt vorzugsweise ≤ 500 ppm, besonders bevorzugt ≤ 100 ppm und am meisten bevorzugt ≤ 50 ppm. Die Bestimmung der Volumenanteile erfolgt jeweils mit dem Messgerät Beckmann Coulter® LS nach ISO 13320.

Die so erhältlichen Polymerisate sind vorzugsweise monomodal, oder, im Falle von Mehrmodalität, ist das erste Maximum der Teilchengrößenverteilung vorzugsweise das Hauptmaximum (Teilchengrößenverteilung bestimmt mit dem Messgerät Beckmann Coulter® LS nach ISO 13320). Das erste Maximum der Teilchengrößenverteilung bezeichnet hierbei das Maximum mit dem kleinsten mittleren Partikeldurchmesser Dw der Teilchengrößenverteilung.

Die Polyvinylalkohol-stabilisierten Polymerisate weisen bei einem Feststoffgehalt von 50% in Wasser eine Viskosität von vorzugsweise < 40000 mPas, besonders bevorzugt < 30000 mPas, ganz besonders bevorzugt < 25000 mPas und am meisten bevorzugt < 20000 mPas auf (gemessen bei 23°C mit einem Brookfield Viskosimeter bei 20 Upm).

Die Monomerauswahl bzw. die Auswahl der Gewichtsanteile der Comonomere erfolgt dabei so, dass im Allgemeinen eine Glasübergangstemperatur Tg von -30°C bis +40°C, vorzugsweise -25°C bis +30°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymere erfolgt nach dem Emulsionspolymerisationsverfahren. Die Emulsionspolymerisation erfolgt üblicherweise in wässrigem Medium. Die Polymerisationstemperatur beträgt im Allgemeinen 40°C bis 100°C, vorzugsweise 60°C bis 95°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation gebräuchlichen Redox-Initiator-Kombinationen. Der Monomerumsatz wird mit der Initiatordosierung gesteuert. Die Initiatoren werden insgesamt so zudosiert, dass eine kontinuierliche Polymerisation gewährleistet ist. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0,015 bis 3 Gew.-%, bezogen auf das Gesamtgewicht der Monomere.

Die genannten Oxidationsmittel, insbesondere die Salze der Peroxodischwefelsäure, können auch alleinig als thermische Initiatoren eingesetzt werden.

Zur Steuerung des Molekulargewichts können während der Emulsionspolymerisationsverfahren regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Erfindungswesentlich ist die Stoßdosierung von einem oder mehren Polyvinylalkoholen mit einem Hydrolysegrad von ≥ 92 Mol-%, vorzugsweise ≥ 96 Mol-% und besonders bevorzugt ≥ 98 Mol-% während der Emulsionspolymerisation. Polyvinylalkohole mit den vorgenannten Hydrolysegraden werden im Folgenden auch als vollverseifte Polyvinylalkohole bezeichnet.

Bevorzugt ist auch der zusätzliche Einsatz von einem oder mehreren teilverseiften Polyvinylalkoholen. Teilverseifte Polyvinylalkohole haben einen Hydrolysegrad von vorzugweise < 92 Mol-%, besonders bevorzugt 80 bis < 92 Mol-% und am meisten bevorzugt von 85 bis 90 Mol-%. In einer weiteren bevorzugten Ausführungsform werden als Polyvinylalkohole ausschließlich vollverseifte Polyvinylalkohole eingesetzt.

Die Höpplerviskosität der Polyvinylalkohole beträgt vorzugsweise 1 bis 50 mPas, besonders bevorzugt 1 bis 40 mPas und am meisten bevorzugt 2 bis 30 mPas (DIN 53015, Methode nach Höppler bei 20°C, 4 %-ige wässrige Lösung).

Bei den Polyvinylalkoholen kann es sich beispielsweise um unmodifizierte Polyvinylalkohole oder um hydrophob modifizierte Polyvinylalkohole handeln. Unmodifizierte Polyvinylalkohole sind bekanntermaßen teil- oder vollverseifte Polymerisate von Vinylacetat-Homopolymeren.

Beispiele für hydrophob modifizierte Polyvinylalkohole sind teil- oder vollverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Bevorzugte hydrophobe Comonomere sind hierbei Ethen, Isopropenylacetat.

Der Anteil der hydrophoben Einheiten beträgt vorzugsweise 0,1 bis 10 Gew.-%, bezogen auf das Gesamtgewicht eines hydrophob modifizierten Polyvinylalkohols.

Bevorzugt sind auch hydrophob modifizierte Polyvinylalkohole, die durch polymeranaloge Umsetzung, beispielsweise Acetalisierung der Vinylalkoholeinheiten mit C1 - bis C4-Aldehyden wie Butyraldehyd erhalten werden.

Bevorzugt werden als Polyvinylalkohole ausschließlich unmodifizierte Polyvinylalkohole oder ausschließlich hydrophob modifizierte Polyvinylalkohole eingesetzt. Bevorzugt werden auch ein oder mehrere unmodifizierte Polyvinylalkohole und zusätzlich ein oder mehrere hydrophob modifizierte Polyvinylalkohole eingesetzt.

Neben Polyvinylalkoholen können ein oder mehrere weitere Schutzkolloide eingesetzt werden, wie beispielsweise Polyvinylpyrrolidone; Polysaccharide in wasserlöslicher Form wie Stärken (Amylose und Amylopectin) oder Dextrine oder Cyclodextrine, Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)-acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Schutzkolloide, beispielsweise Polymere mit Monomereinheiten mit quarternären Ammoniumgruppen. Die genannten Schutzkolloide sind mittels dem Fachmann bekannter Verfahren zugänglich.

Vorzugsweise werden neben Polyvinylalkoholen keine weiteren Schutzkolloide eingesetzt.

Die Polyvinylalkohole und gegebenenfalls die weiteren Schutzkolloide werden im Allgemeinen in einer Menge von insgesamt 1 bis 20 Gew.-%, bezogen auf das Gesamtgewicht der Monomere, bei der Emulsionspolymerisation eingesetzt.

Vollverseifte Polyvinylalkohole werden in einer Menge von 40 bis 100 Gew.-% eingesetzt, bezogen auf das Gesamtgewicht der bei der Emulsionspolymerisation insgesamt eingesetzten Menge an Polyvinylalkohol. Vollverseifte Polyvinylalkohole werden vorzugsweise in einer Menge von 20 bis 100 Gew.-% und besonders bevorzugt 40 bis 100 Gew.-% eingesetzt, je bezogen auf das Gesamtgewicht der bei der Emulsionspolymerisation insgesamt eingesetzten Menge an Schutzkolloid. Teilverseifte Polyvinylalkohole können beispielsweise zu 0 bis 80 Gew.-%, besonders bevorzugt 0 bis 60 Gew.-% und am meisten bevorzugt 40 bis 60 Gew.-% eingesetzt werden, je bezogen auf das Gesamtgewicht der bei der Emulsionspolymerisation insgesamt eingesetzten Menge an Schutzkolloid bzw. Polyvinylalkohol.

Im Emulsionspolymerisationsverfahren kann auch in Gegenwart von Emulgatoren polymerisiert werden. Bevorzugte Mengen an Emulgatoren sind 1 bis 7 Gew.-%, bezogen auf das Gesamtgewicht der Monomere. Besonders bevorzugt wird in Abwesenheit von Emulgatoren polymerisiert. Beispiele für Emulgatoren sind anionische, kationische oder nichtionische Emulgatoren, wie anionische Tenside, insbesondere Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können insgesamt vorgelegt oder zudosiert werden. Es werden vorzugsweise 0 bis 100 Gew.-%, besonders bevorzugt 2 bis 50 Gew.-%, noch mehr bevorzugt 3 bis 30 Gew.-% und am meisten bevorzugt 3 bis 20 Gew.-% der Monomere vorgelegt, bezogen auf das Gesamtgewicht der Monomere, und die verbleibende Restmenge an Monomeren wird zu einem späteren Zeitpunkt während der Emulsionspolymerisation zudosiert. Die Dosierungen können separat (räumlich und zeitlich) durchgeführt werden, oder die zu dosierenden Komponenten können alle oder teilweise voremulgiert dosiert werden.

Erfindungswesentlich ist auch, dass ein oder mehrere Polyvinylalkohole mit einem Hydrolysegrad von ≥ 92 Mol-% während der Emulsionspolymerisation stoßdosiert werden.

Eine Stoßdosierung dauert ≤ 3%, bevorzugt 0,5 bis 2% der gesamten Dauer der Emulsionspolymerisation. Die genannte Dauer der Stoßdosierung bezieht sich hierbei insbesondere auf Ansatzgrößen zur Herstellung von 20 t Polymerdispersion. Im Falle von Ansätzen anderer Größe bestimmt sich die Dauer der Stoßdosierung vorzugsweise dadurch, dass bei einer Skalierung des jeweiligen Ansatzes auf eine Ansatzgröße zur Herstellung von 20 t Polymerdispersion die vorgenannten Bereiche für die Dauer der Stoßdosierung eingehalten werden. Die Dauer der Emulsionspolymerisation bemisst sich beginnend mit der Initiierung der Emulsionspolymerisation bis zu dem Zeitpunkt, zu dem der Umsatz der insgesamt eingesetzten ethylenisch ungesättigten Monomere vorzugsweise ≥ 85 Gew.-% oder gleich 85 Gew.-%, besonders bevorzugt ≥ 90 Gew.-% oder gleich 90 Gew.-% und am meisten bevorzugt ≥ 95 Gew.-% oder gleich 95 Gew.-% beträgt.

Es können ein oder mehrere Stoßdosierungen von Polyvinylalkohol mit erfindungswesentlichem Hydrolysegrad durchgeführt werden. Vorzugsweise werden 1 bis 6, besonders bevorzugt 1 bis 3 und am meisten bevorzugt wird eine Stoßdosierung von Polyvinylalkohol mit erfindungswesentlichem Hydrolysegrad durchgeführt.

Pro Stoßdosierung werden vorzugsweise ≥ 3 Gew.-%, besonders bevorzugt 4 bis 50 Gew.-%, noch mehr bevorzugt 5 bis 40 Gew.-% und am meisten bevorzugt 9 bis 35 Gew.-% Polyvinylalkohole dosiert, je bezogen auf das Gesamtgewicht der für die Emulsionspolymerisation insgesamt zudosierten und gegebenenfalls vorgelegten Menge an Polyvinylalkoholen.

Die erstmalige Stoßdosierung von Polyvinylalkohol erfolgt vorzugsweise nach 10 bis 90%, besonders bevorzugt nach 25 bis 50% der gesamten Dauer der Emulsionspolymerisation.

Zum Zeitpunkt der Stoßdosierung, insbesondere der ersten Stoßdosierung, von Polyvinylalkohol beträgt die Gesamtmenge der bis zu diesem Zeitpunkt vorgelegten und zudosierten ethylenisch ungesättigten Monomere vorzugsweise 20 bis 80 Gew.-% und besonders bevorzugt 30 bis 65 Gew.-%, bezogen auf das Gesamtgewicht der bei der Emulsionspolymerisation insgesamt eingesetzten ethylenisch ungesättigten Monomere.

Der Polyvinylalkohol-Anteil kann vollständig zudosiert werden. Zudosiert, insbesondere mittels Stoßdosierung, werden vorzugsweise 5 bis 70 Gew.-%, besonders bevorzugt 7 bis 50 Gew.-% und am meisten bevorzugt 10 bis 35 Gew.-% des Polyvinylalkohols, jeweils bezogen auf die bei der Emulsionspolymerisation insgesamt eingesetzte Menge an Polyvinylalkohol. Vorzugsweise werden 30 bis 95 Gew.-%, besonders bevorzugt 50 bis 93 Gew.-% und am meisten bevorzugt 65 bis 90 Gew.-% des Polyvinylalkohols vorgelegt, jeweils bezogen auf die bei der Emulsionspolymerisation insgesamt eingesetzten Menge an Polyvinylalkohol.

Der mittels Stoßdosierung eingebrachte Polyvinylalkohol kann beispielsweise auf Raumtemperatur oder auf eine Temperatur zwischen Raumtemperatur und 100°C temperiert sein. Vorzugsweise liegt die vorgenannte Temperatur in einem Bereich von 30°C oberhalb oder unterhalb der Temperatur, bei der die Emulsionspolymerisation zum Zeitpunkt der Stoßdosierung durchgeführt wird.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 45 bis 60 Gew.-%.

Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Trocknungshilfen sind beispielsweise Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugte Trocknungshilfen sind Polyvinylalkohole.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von ≤ 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Polymerpulverzusammensetzungen sind beispielsweise Pigmente, Füllstoffe, Schaumstabilisatoren, Hydrophobierungsmittel.

Die nach dem erfindungsgemäßen Verfahren hergestellten Polymerisate liegen also vorzugsweise in Form von in Wasser redispergierbaren Polymerpulvern und besonders bevorzugt in Form von wässrigen Dispersionen vor.

Die nach dem erfindungsgemäßen Verfahren erhaltenen Polyvinylalkohol-stabilisierten Polymerisate eignen sich zur Verwendung als oder in Klebemittel für die Verklebung unterschiedlicher Substrate, vorzugsweise von cellulosischen Materialien, wie Papier, Pappe, Holz oder Baumwolle, oder Kunststoffen, wie Polyethylen-, Polyvinylchlorid, Polyamid, Polyester-, Polystyrol oder Acrylnitril-Butadien-Styrol. Die Substrate können beispielsweise in Form von Fasern oder Folien vorliegen. Bevorzugte ist hierbei die Verwendung als Papierklebemittel, Verpackungsklebstoff, Holzklebstoff oder allgemein als Klebemittel für gewebte oder nichtgewebte Fasermaterialien. Am meisten bevorzugt ist der Einsatz der Polyvinylalkohol-stabilisierten Polymerisate in Holzleim.

Insbesondere im Falle des Einsatzes erfindungsgemäß hergestellter Polymerisate in Holzleim erwies sich die erfindungsgemäße Emulsionspolymerisation in Gegenwart von hydrophob modifizierten Polyvinylalkoholen als besonders vorteilhaft. Auf diese Weise wurden Anwendungsprodukte mit besonders hohen Wasserfestigkeiten erhalten.

Die erfindungsgemäß hergestellten Polymerisate können auch zur Steigerung der Wärmestandfestigkeit der Anwendungsprodukte hilfreich sein.

Des Weiteren können die Polyvinylalkohol-stabilisierten Polymerisate in bauchemischen Beschichtungsmitteln in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben eingesetzt werden.

Überraschenderweise werden mit den erfindungsgemäßen Verfahren Polymerisate zugänglich, die bei gleichem Feststoffgehalt eine signifikant geringere Viskosität aufweisen als entsprechende nach dem Stand der Technik hergestellte Polymerisate. Des Weiteren enthalten die erfindungsgemäßen Polymerisate einen geringen Grobanteil. Wässrige Dispersionen von erfindungsgemäßen Polymerisaten neigen auch weniger zur Dilatanz als entsprechende herkömmliche Dispersionen, die Polyvinylalkohole mit den erfindungsgemäßen Hydrolysegraden enthalten, aber nicht unter Anwendung der erfindungsgemäßen Stoßdosierung hergestellt wurden.

Aussagen zu Suspensionspolymerisationsverfahren sind nicht auf Emulsionspolymerisationsverfahren übertragbar, da diese beiden Verfahren nach unterschiedlichen Mechanismen ablaufen und damit zusammenhängend Polymere mit ganz anderen Partikelgrößen hervorbringen, die wiederum unterschiedliche Anforderungen an die Stabilisierung stellen.

Die nachfolgenden Beispiele dienen der weiteren Erläuterung der Erfindung:
Rohstoffe und allgemein Reaktionsbedingungen:
   Alle eingesetzten Rohstoffe waren kommerziell verfügbare technische Produkte, die keiner speziellen Vorbehandlung unterzogen wurden. Als "Wasser" wurde durch Ionenaustausch entsalztes Wasser eingesetzt.

Neben Vinylacetat (VAc) kamen folgende Monomere zum Einsatz: Ethylen (E); Butylacrylat (BA) und Styrol (St).

Als Oxidationsmittel wurde bei Polymerisation von Vinylacetat Wasserstoffperoxid (H₂O₂) und bei Copolymerisationen mit Styrol Kaliumperoxodisulfat (KPS) eingesetzt.

Als Reduktionsmittel wurde bei Homopolymerisationen von Vinylacetat Weinsäure, bei Copolymerisationen mit Vinylacetat und Ethylen Ascorbinsäure und bei Copolymerisationen mit Styrol Natriumformaldeydsulfoxylat (SFS) verwendet.

Als Schutzkolloide wurden die in Tabelle 1 näher beschriebenen Polyvinylalkohole eingesetzt. Die Polyvinylalkohole wurden in Form von wässrigen Lösungen eingesetzt. Zur Herstellung dieser wässrigen Lösungen von Polyvinylalkoholen mit einer Konzentration von 11 Gew.-% wurde der zu 88 mol-% verseifte Polyvinylalkohol für mindestens 2 Stunden bei 80-85°C, die zu mehr als 88 mol-% verseiften Polyvinylalkohole für mindestens 2 Stunden bei Temperaturen zwischen 90 und 95°C gelöst.

Alle Drucklosreaktionen wurden in einem 2L Glasreaktor mit Rückflusskühler und Ankerrührer bei einer Rührergeschwindigkeit von 200 UpM durchgeführt. Die Copolymerisationen mit Ethylen wurden in einem 5L-Druckreaktor für Arbeitsdrücke bis 85 bar, ausgerüstet mit elektronischer Temperaturmessung und -regelung, einem dreistufigen Paddelrührer, betrieben bei 400 UpM, einem Sicherheitsventil und fünf parallelen Dosiermöglichkeiten, durchgeführt.

In Tabelle 2 sind die Bedingungen der Polymerisationsverfahren der Vergleichsbeispiele und der Beispiele aufgelistet; die Eigenschaften der wässerigen Polymerdispersionen sind in Tabelle 3 verzeichnet.

### Vergleichsbeispiel 1:

Es wurden 545 g einer 11 Gew.-%igen wässrigen Lösung des vollverseiften Polyvinylalkohols B, 5,8 g einer 20 Gew.-%igen wässrigen Weinsäure-Lösung, 34 g Vinylacetat und 248 g Wasser im Reaktor vorgelegt. Bei einer Solltemperatur von 50°C wurde die Dosierung 1, die aus einer 2%igen wässrigen WasserstoffperoxidLösung bestand, gestartet und mit einer Dosierrate von 13,9 mL/h in 225 min zugegeben. Die Dosierung 2 bestand aus 714 g Vinylacetat und wurde 5 min nach dem Start der Dosierung 1 in 150 min vollständig dosiert. Während der Dosierung 2 wurde die Reaktionstemperatur auf 83°C erhöht. Nach Beendigung der Dosierung 1 wurden 6,3 g einer 10 Gew.-%igen wässrigen tert-Butylhydroperoxid-Lösung und 6,3 g einer 10 Gew.-%igen wässrigen Ascorbinsäure-Lösung zudosiert, und es wurde für weitere 10 Minuten auspolymerisiert. Anschließend wurde die erhaltene Dispersion unter Vakuum auf Raumtemperatur abgekühlt.

**Tabelle 1: Eingesetzte Polyvinylalkohole (PVOH):**

| PVOH | Handelsname | Hydrolysegrad [Mol-%] | Viskosität^{a)} [mPas] |
|---|---|---|---|
| A | Mowiol® 8/88^{b)} | 88,0 | 8,0 |
| B | Mowiol® 6/98^{b)} | 98,4 | 6, 0 |
| C | Exceval® RS2117^{c)} | 98,3 | 26,5 |

| | | | |
|---|---|---|---|
| a)Höpplerviskosität bestimmt nach DIN 53015 bei 20°C in 4 %-iger wässriger Lösung; b)Verseifungsprodukt eines Vinylacetat-Homopolymers; c)Verseifungsprodukt eines Vinylacetat-Ethylen-Copolymers. | | | |

### Vergleichsbeispiel 2:

Wie in Vergleichsbeispiel 1, aber die Vorlage bestand aus 654 g einer 11 Gew.-%igen wässrigen Lösung des vollverseiften Polyvinylalkohols B und 154 g Wasser bei sonst gleichen Einsatzmengen und gleicher Reaktionsführung.

### Vergleichsbeispiel 3:

Wie Vergleichsbeispiel 1, aber die Vorlage bestand aus 654 g einer 11 Gew.-%igen wässrigen Lösung einer Mischung, bestehend aus gleichen Gewichtsteilen des teilverseiften Polyvinylalkohols A mit dem vollverseiften ethylenhaltigen Polyvinylalkohol C, und 154 g Wasser bei sonst gleichen Einsatzmengen und gleicher Reaktionsführung.

**Tabelle 2: Polymerisationsverfahren der Vergleichsbeispiele 1 bis 6 (V1 bis V6) und der Beispiele 1 bis 18 (B1 bis B18):**

| | Monomer | PVOH | PVOH-Menge [Gew.%]^{a)} | Verteilung PVOH: Vorlage / Dosierung | Dosierzeitpunkt PVOH [min]^{b)} | Dosierung | T^{f)} [°C] |
|---|---|---|---|---|---|---|---|
| V1 | VAc | B | 8 | 100 / 0 | - | - | - |
| V2 | VAc | B | 9,6 | 100 / 0 | - | - | - |
| V3 | VAc | C | 9,6 | 100 / 0 | - | - | - |
| V4 | St/BA | C | 9,6 | 100 / 0 | - | - | - |
| V5 | VAc | B | 9,6 | 70 / 30 | c) | kont. | - |
| V6 | VAc | B | 9,6 | 70 / 30 | d) | kont. | - |
| B1 | VAc | B | 9,6 | 90 / 10 | 90 | Stoß | 23 |
| B2 | VAc | B | 9,6 | 83 / 17 | 90 | Stoß | 23 |
| B3 | VAc | B | 9,6 | 70 / 30 | 90 | Stoß | 23 |
| B4 | VAc | B | 8 | 90 / 10 | 90 | Stoß | 23 |
| B5 | Vac | B | 8 | 83 / 17 | 90 | Stoß | 23 |
| B6 | VAc | B | 11 | 90 / 10 | 90 | Stoß | 23 |
| B7 | VAc | B | 11 | 83 / 17 | 90 | Stoß | 23 |
| B8 | VAc | B | 9,6 | 83 / 17 | 90 | Stoß | 70 |
| B9 | VAc | B | 9,6 | 83 / 17 | 70 | Stoß | 23 |
| B10 | VAc | B | 9,6 | 70 / 30 | 70 | Stoß | 23 |
| B11 | VAc | C | 9,6 | 83 / 17 | 90 | Stoß | 23 |
| B12 | VAc | A:C =1:1 | 9,6 | 90 / 10 | 90 | Stoß | 23 |
| B13 | VAc | A:C =1:1 | 9,6 | 83 / 17 | 90 | Stoß | 23 |
| B14 | VAc/E | B | 9,6 | 83 / 17 | 90 | Stoß | 23 |
| B15 | VAc/E | A:C =1:1 | 9,6 | 83 / 17 | 90 | Stoß | 23 |
| B16 | St/BA | C | 9,6 | 83 / 17 | 90 | Stoß | 23 |
| B17 | St/BA | A:C =1:1 | 9,6 | 83 / 17 | 90 | Stoß | 23 |
| B18 | St/BA | A:C =1:1 | 9,6 | 83 / 17 | 180 | Stoß | 23 |

| | | | | | | | |
|---|---|---|---|---|---|---|---|
| a)bezogen auf das Gesamtgewicht der Monomere; b)Angabe des Starts der Dosierung von PVOH bezogen auf den Start der Polymerisation; c)Der Polyvinylalkohol in der Dosierung wurde über einen Zeitraum von 30 Minuten beginnend mit der Vinylacetat-Dosierung zugegeben; d)Der Polyvinylalkohol in der Dosierung wurde über einen Zeitraum von 30 Minuten beginnend 70 Minuten nach Initiatordosierstart zugegeben; e)kont. - kontiunuierliche Dosierung von PVOH; Stoß = Stoßdosierung von PVOH; f)Temperatur der PVOH-Dosierung. | | | | | | | |

### Vergleichsbeispiel 4:

Die Reaktorvorlage bestehend aus 611 g einer 11 Gew.-%igen wässrigen Lösung des vollverseiften Polyvinylalkohols C, 17,5 g Styrol und 17,5 g Butylacrylat und 40 g Wasser wurde auf 80°C aufgeheizt. Bei Solltemperatur wurden die Dosierungen 1 und 2 mit einer Rate von 20 mL/h gestartet und innerhalb von 240 min dosiert. Dosierung 1 war eine 2,6 Gew.-%ige wässrige Lösung von Kaliumperoxodisulfat; Dosierung 2 war eine 4,4 Gew.-%ige wässrige Lösung von Natriumformaldehydsulfoxylat. 5 Minuten nach Start der Dosierungen 1 und 2 wurde die Dosierung 3, bestehend aus 333 g Styrol und 333 g Butylacrylat gestartet und bei konstanter Rate von 222 g/h dosiert. Nach Beendigung der Dosierungen 1 und 2 wurden 5,9 g einer 10 Gew.-%igen wässrigen tert-Butylhydroperoxid-Lösung und 5,9 g einer 10 Gew.-%igen wässrigen Ascorbinsäure-Lösung zudosiert, und es wurde für weitere 10 Minuten auspolymerisiert. Anschließend wurde die erhaltene Dispersion unter Vakuum auf Raumtemperatur abgekühlt.

### Vergleichsbeispiel 5:

Wie Vergleichsbeispiel 2, aber die Vorlagemenge an der 11 Gew.-%igen wässrigen Lösung des vollverseiften Polyvinylalkohols B betrug 458 g und zeitgleich mit dem Dosierbeginn von Vinylacetat wurde die kontinuierliche Dosierung bestehend aus 196 g der 11 Gew.-%igen wässrigen Lösung des vollverseiften Polyvinylalkohols B gestartet und über einen Zeitraum von 30 Minuten komplett zugegeben.

### Vergleichsbeispiel 6:

Wie Vergleichsbeispiel 2, aber die Vorlagemenge an der 11 Gew.-%igen wässrigen Lösung des vollverseiften Polyvinylalkohols B betrug 458 g und 70 Minuten nach Start der Dosierung 1 wurde die kontinuierliche Dosierung bestehend aus 196 g der 11 Gew.-%igen wässrigen Lösung des vollverseiften Polyvinylalkohols B gestartet und über einen Zeitraum von 30 Minuten komplett zugegeben.

### Beispiel 1:

Es wurden 591 g einer 11 Gew.-%igen wässrigen Lösung des vollverseiften Polyvinylalkohols B, 5,8 g einer 20 Gew.-%igen wässrigen Weinsäure-Lösung, 34 g Vinylacetat und 154 g Wasser im Reaktor vorgelegt. Bei einer Solltemperatur von 50°C wurde die Dosierung 1, die aus einer 2%-igen wässrigen Wasserstoffperoxid-Lösung bestand, gestartet und mit einer Dosierrate von 13,9 mL/h in 225 min zugegeben. Die Dosierung 2 bestand aus 714 g Vinylacetat und wurde 5 min nach dem Start der Dosierung 1 in 150 min vollständig dosiert. Während der Dosierung 2 wurde die Reaktionstemperatur auf 83°C erhöht. 90 min nach Start der Dosierung 1 erfolgte eine Stoßdosierung von 64 g der 11 Gew.-%igen wässrigen Lösung des vollverseiften Polyvinylalkohols B. Nach Beendigung der Dosierung 1 wurden 6,3 g einer 10 Gew.-%igen wässrigen tert-Butylhydroperoxid-Lösung und 6,3 g einer 10 Gew.-%igen wässrigen Ascorbinsäure-Lösung zudosiert und es wurde für weitere 10 Minuten auspolymerisiert. Anschließend wurde die erhaltene Dispersion unter Vakuum auf Raumtemperatur abgekühlt.

### Beispiel 2:

Wie Beispiel 1, aber die Vorlagemenge an der 11 Gew.-%igen wässrigen Lösung des vollverseiften Polyvinylalkohols B betrug 545 g und die Stoßdosierung der 11 Gew.-%igen wässrigen Lösung des vollverseiften Polyvinylalkohols B betrug 109 g.

### Beispiel 3:

Wie Beispiel 1, aber die Vorlagemenge an der 11 Gew.-%igen wässrigen Lösung des vollverseiften Polyvinylalkohols B betrug 458 g und die Stoßdosierung der 11 Gew.-%igen wässrigen Lösung des vollverseiften Polyvinylalkohols B betrug 196 g.

### Beispiel 4:

Es wurden 490 g einer 11 Gew.-%igen wässrigen Lösung des vollverseiften Polyvinylalkohols B, 5,8 g einer 20 Gew.-%igen wässrigen Weinsäure-Lösung, 34 g Vinylacetat und 248 g Wasser im Reaktor vorgelegt. Bei einer Solltemperatur von 50°C wurde die Dosierung 1, die aus einer 2%-igen wässrigen Wasserstoffperoxid-Lösung bestand, gestartet und mit einer Dosierrate von 13,9 mL/h in 225 min zugegeben. Die Dosierung 2 bestand aus 714 g Vinylacetat und wurde 5 min nach dem Start der Dosierung 1 in 150 min vollständig dosiert. Während der Dosierung 2 wurde die Reaktionstemperatur auf 83°C erhöht. 90 min nach Start der Dosierung 1 erfolgte eine Stoßdosierung von 55 g der 11 Gew.-%igen wässrigen Lösung des vollverseiften Polyvinylalkohols B. Nach Beendigung der Dosierung 1 wurden 6,3 g einer 10 Gew.-%igen wässrigen tert-Butylhydroperoxid-Lösung und 6,3 g einer 10 Gew.-%igen wässrigen Ascorbinsäure-Lösung zudosiert und es wurde für weitere 10 Minuten auspolymerisiert. Anschließend wurde die erhaltene Dispersion unter Vakuum auf Raumtemperatur abgekühlt.

### Beispiel 5

Wie Beispiel 4, aber die Vorlagemenge an der 11 Gew.-%igen wässrigen Lösung des vollverseiften Polyvinylalkohols B betrug 453 g und die Stoßdosierung der 11 Gew.-%igen wässrigen Lösung des vollverseiften Polyvinylalkohols B betrug 92,7 g.

### Beispiel 6:

Es wurden 675 g einer 11 Gew.-%igen wässrigen Lösung des vollverseiften Polyvinylalkohols B, 5,8 g einer 20 Gew.-%igen wässrigen Weinsäure-Lösung, 34 g Vinylacetat und 65 g Wasser im Reaktor vorgelegt. Bei einer Solltemperatur von 50°C wurde die Dosierung 1, die aus einer 2%-igen wässrigen Wasserstoffperoxid-Lösung bestand, gestartet und mit einer Dosierrate von 13,9 mL/h in 225 min zugegeben. Die Dosierung 2 bestand aus 716 g Vinylacetat und wurde 5 min nach dem Start der Dosierung 1 in 150 min vollständig dosiert. Während der Dosierung 2 wurde die Reaktionstemperatur auf 83°C erhöht. 90 Minuten nach Start der Dosierung 1 erfolgte eine Stoßdosierung von 75 g der 11 Gew.-%igen wässrigen Lösung des vollverseiften Polyvinylalkohols B. Nach Beendigung der Dosierung 1 wurden 6,3 g einer 10 Gew.-%igen wässrigen tert-Butylhydroperoxid-Lösung und 6,3 g einer 10 Gew.-%igen wässrigen Ascorbinsäure-Lösung zudosiert und es wurde für weitere 10 Minuten auspolymerisiert. Anschließend wurde die erhaltene Dispersion unter Vakuum auf Raumtemperatur abgekühlt.

### Beispiel 7:

Wie Beispiel 6, aber die Vorlagemenge an der 11 Gew.-%igen wässrigen Lösung des vollverseiften Polyvinylalkohols B betrug 623 g und die Stoßdosierung der 11 Gew.-%igen wässrigen Lösung des vollverseiften Polyvinylalkohols B betrug 127 g.

### Beispiel 8:

Wie Beispiel 2, aber die Stoßdosierung wurde auf 70°C temperiert.

### Beispiel 9

Wie Beispiel 2, aber die Stoßdosierung erfolgte 70 Minuten nach Start der Dosierung 1.

### Beispiel 10

Wie Beispiel 3, aber die Stoßdosierung erfolgte 70 Minuten nach Start der Dosierung 1.

### Beispiel 11

Wie Beispiel 2, aber als Polyvinylalkohol in der Vorlage und der Stoßdosierung wurde ein vollverseifter ethylenhaltiger Polyvinylalkohol C verwendet.

### Beispiel 12

Wie Beispiel 1, aber als Polyvinylalkohol in der Vorlage und der Stoßdosierung wurde eine Mischung aus gleichen Gewichtsanteilen der Polyvinylalkohole A und C verwendet.

### Beispiel 13

Wie Beispiel 2, aber als Polyvinylalkohol in der Vorlage und der Stoßdosierung wurde eine Mischung aus gleichen Gewichtsanteilen der Polyvinylalkohole A und C verwendet.

### Beispiel 14:

Es wurden 2610 g einer 11 Gew.-%igen wässrigen Lösung des vollverseiften Polyvinylalkohols B, 27,6 g einer 20 Gew.-%igen wässrigen Ascorbinsäure-Lösung, 163,2 g Vinylacetat und 330 g Wasser im Reaktor vorgelegt und 180 g Ethylen aufgedrückt und auf Solltemperatur von 80°C temperiert. Bei Solltemperatur wurde die Dosierung 1, die aus einer 2%-igen wässrigen Wasserstoffperoxid-Lösung bestand, gestartet und mit einer Dosierrate von 66,0 mL/h in 225 min zugegeben. 5 Minuten nach Start der Dosierung 1 wurde die Dosierung 2, bestehend aus 3076,8 g Vinylacetat, gestartet und über einen Zeitraum von in 150 min vollständig mit konstanter Rate dosiert. 90 Minuten nach Start der Dosierung 1 erfolgte eine Stoßdosierung von 534 g der 11 Gew.-%igen wässrigen Lösung des vollverseiften Polyvinylalkohols B. Während des Dosierzeitraums von Dosierung 2 wurde bei einem konstanten Druck von 15 bar insgesamt noch 180 g Ethylen zudosiert. Nach Beendigung der Dosierung 1 wurden 30,6 g einer 10 Gew.-%igen wässrigen tert-Butylhydroperoxid-Lösung und 30,6 g einer 10 Gew.-%igen wässrigen Ascorbinsäure-Lösung zudosiert und es wurde für weitere 10 Minuten auspolymerisiert. Anschließend wurde die erhaltene Dispersion unter Vakuum auf Raumtemperatur abgekühlt.

### Beispiel 15:

Wie Beispiel 14, aber als Polyvinylalkohol in der Vorlage und der Stoßdosierung wurde eine Mischung aus gleichen Gewichtsanteilen der Polyvinylalkohole A und C verwendet.

### Beispiel 16:

Die Reaktorvorlage, bestehend aus 507 g einer 11 Gew.-%igen wässrigen Lösung des vollverseiften Polyvinylalkohols C, aus 17,5 g Styrol und 17,5 g Butylacrylat und 40 g Wasser, wurde auf 80°C aufgeheizt. Bei Solltemperatur wurden die Dosierungen 1 und 2 mit einer Rate von 20 mL/h gestartet und innerhalb von 240 min dosiert. Dosierung 1 war eine 2,6 Gew.-%ige wässrige Lösung von Kaliumperoxodisulfat; Dosierung 2 war eine 4,4 Gew.-%ige wässrige Lösung von Natriumformaldehydsulfoxylat. 5 Minuten nach Start der Dosierungen 1 und 2 wurde die Dosierung 3, bestehend aus 333 g Styrol und 333 g Butylacrylat gestartet und bei konstanter Rate von 222 g/h dosiert. 90 Minuten nach Start der Dosierungen 1 und 2 erfolgte eine Stoßdosierung von 103,6 g der 11 Gew.-%igen wässrigen Lösung des vollverseiften Polyvinylalkohols C. Nach Beendigung der Dosierungen 1 und 2 wurden 5,9 g einer 10 Gew.-%igen wässrigen tert-Butylhydroperoxid-Lösung und 5,9 g einer 10 Gew.-%igen wässrigen Ascorbinsäure-Lösung zudosiert und es wurde für weitere 10 Minuten auspolymerisiert. Anschließend wurde die erhaltene Dispersion unter Vakuum auf Raumtemperatur abgekühlt.

### Beispiel 17:

Wie Beispiel 16, aber als Polyvinylalkohol in der Vorlage und der Stoßdosierung wurde eine Mischung aus gleichen Gewichtsanteilen der Polyvinylalkohole A und C verwendet.

### Beispiel 18:

Wie Beispiel 16, aber als Polyvinylalkohol in der Vorlage und der Stoßdosierung wurde eine Mischung aus gleichen Gewichtsanteilen der Polyvinylalkohole A und C verwendet.
und die Stoßdosierung erfolgte 180 Minuten nach Start der Dosierung 1 und 2.

Von allen Dispersionen wurde ein Aufstrich angefertigt und visuell beurteilt. Während die Aufstriche der Vergleichsbeispiele V1 bis V6 stark bis extrem stippig waren, wurden mit den erfindungsgemäßen Beispielen durchweg stippenfreie Aufstriche erhalten.

**Tabelle 3: Eigenschaften der wässrigen Polymerdispersionen.**

| 1 | 2 | 3 | 4 | 5 |
|---|---|---|---|---|
| | FG [%] | Brookfield-Viskosität [mPa*s] | Partikelgrößenverteilung x3 [µm] | dF3 (≥ 2 µm) |
| V1 | 49, 6 | 50000 | 2,8 | 50 |
| V2 | 49,8 | 32900 | 7,3 | 82 |
| V3 | 50,0 | 73100 | 10,2 | 93 |
| V4 | 48,1 | 86000 | 8,5 | 100 |
| V5 | 49, 5 | 66200 | 4,7 | 72 |
| V6 | 49,7 | 44300 | 4,3 | 67 |
| B1 | 49, 6 | 1700 | 1,2 | 23 |
| B2 | 50,1 | 1480 | 1,1 | 15 |
| B3 | 50,1 | 2020 | 1,4 | 24 |
| B4 | 49,4 | 2050 | 1,5 | 23 |
| B5 | 49, 9 | 1660 | 1,3 | 19 |
| B6 | 49, 5 | 1510 | 1,4 | 29 |
| B7 | 49,8 | 2060 | 1,3 | 27 |
| B8 | 50,1 | 1480 | 1,1 | 16 |
| B9 | 49,3 | 1670 | 1,4 | 18 |
| B10 | 49,7 | 2000 | 1,3 | 21 |
| B11 | 49, 5 | 15300 | 1,3 | 19 |
| B12 | 49,4 | 11000 | 1,2 | 19 |
| B13 | 49, 9 | 11700 | 1,5 | 22 |
| B14 | 53,1 | 2490 | 1,6 | 25 |
| B15 | 52,9 | 25000 | 1,0 | 23 |
| B16 | 47,7 | 11500 | 0,8 | 19 |
| B17 | 48,1 | 10000 | 0,7 | 24 |
| B18 | 48,2 | 10800 | 0, 9 | 21 |

| | | | | |
|---|---|---|---|---|
| Spalte 1: Nummer der Beispiele B1 bis B18 und der Vergleichsbeispiele V1 bis V6; Spalte 2: Feststoffgehalt der Dispersionen in Gew.-%; Spalte 3: Brookfield-Viskosität in mPas bestimmt mit einem Brookfield Viskosimeter bei 20 Upm und 23°C; Spalte 4: Mittlerer Partikeldurchmesser der volumengewichteten Teilchengrößenverteilung in µm; bestimmt mit Beckmann Coulter LS nach ISO 13320; Spalte 5: Volumenanteil der Partikel mit einem Partikeldurchmesser ≥ 2 µm in Vol.-%; bestimmt mit Beckmann Coulter LS nach ISO 13320. | | | | |

## Patentansprüche

1. Verfahren zur Herstellung von Polyvinylalkohol-stabilisierten Polymerisaten mittels radikalisch initiierter Emulsionspolymerisation von einem oder mehreren ethylenisch ungesättigten Monomeren, **dadurch gekennzeichnet, dass**
40 bis 100 Gew,-% Polyvinylalkohole mit einem Hydrolysegrad von ≥ 92 Mol-%, bezogen auf das Gesamtgewicht der bei der Emulsionspolymerisation insgesamt eingesetzten Menge an Polyvinylalkohol, eingesetzt werden und
ein oder mehrere Polyvinylalkohole mit einem Hydrolysegrad von ≥ 92 Mol-% während der Emulsionspolymerisation mittels Stoßdosierung zudosiert werden,
wobei eine Stoßdosierung ≤ 3% der gesamten Dauer der Emulsionspolymerisation dauert.

2. Verfahren zur Herstellung von Polyvinylalkohol-stabilisierten Polymerisaten nach Anspruch 1, **dadurch gekennzeichnet, dass** 4 bis 50 Gew.-% Polyvinylalkohol mittels Stoßdosierung zudosiert werden, bezogen auf das Gesamtgewicht der bei der Emulsionspolymerisation insgesamt eingesetzten Menge an Polyvinylalkohol.

3. Verfahren zur Herstellung von Polyvinylalkohol-stabilisierten Polymerisaten nach Anspruch 1 bis 2, **dadurch gekennzeichnet, dass** zum Zeitpunkt der ersten Stoßdosierung von Polyvinylalkohol die Gesamtmenge der bis zu diesem Zeitpunkt vorgelegten und zudosierten ethylenisch ungesättigten Monomere 20 bis 80 Gew.-% beträgt, bezogen auf das Gesamtgewicht der bei der Emulsionspolymerisation insgesamt eingesetzten ethylenisch ungesättigten Monomere.

4. Verfahren zur Herstellung von Polyvinylalkohol-stabilisierten Polymerisaten nach Anspruch 1 bis 3, **dadurch gekennzeichnet, dass** ein oder mehrere hydrophob modifizierte Polyvinylalkohole mit einem Hydrolysegrad von ≥ 92 Mol-% während der Emulsionspolymerisation mittels Stoßdosierung zudosiert werden, wobei es sich bei den hydrophob modifizierten Polyvinylalkoholen um Verseifungsprodukte handelt von Copolymerisaten aus Vinylacetat und hydrophoben Comonomeren ausgewählt aus der Gruppe umfassend Vinylester von gesättigten Carbonsäuren mit 3 bis 15 C-Atomen, Dialkylmaleinate, Dialkylfumarate, Vinylchlorid, Vinylalkylether und Olefine.

5. Verfahren zur Herstellung von Polyvinylalkohol-stabilisierten Polymerisaten nach Anspruch 1 bis 4, **dadurch gekennzeichnet, dass** zusätzlich ein oder mehrere Polyvinylalkohole mit einem Hydrolysegrad von < 92 Mol-% mittels Stoßdosierung zudosiert werden.

6. Verfahren zur Herstellung von Polyvinylalkohol-stabilisierten Polymerisaten nach Anspruch 1 bis 5, **dadurch gekennzeichnet, dass** ein oder mehrere ethylenisch ungesättigte Monomere ausgewählt werden aus der Gruppe umfassend Vinylester, (Meth)acrylsäureester, Vinylaromaten, Olefine, 1,3-Diene und Vinylhalogenide.

7. Verfahren zur Herstellung von Polyvinylalkohol-stabilisierten Polymerisaten nach Anspruch 1 bis 6, **dadurch gekennzeichnet, dass** der Volumenanteil der Polyvinylalkoholstabilisierten Polymerisate mit Partikeldurchmessern ≥ 2 µm < 40 Vol.-% beträgt (Bestimmung mit dem Messgerät Beckmann Coulter® LS nach ISO 13320).

8. Polyvinylalkohol-stabilisierte Polymerisate erhältlich nach den Verfahren gemäß Anspruch 7, **dadurch gekennzeichnet, dass**
die Polyvinylalkohol-stabilisierten Polymerisate 40 bis 100 Gew.-% Polyvinylalkohole mit einem Hydrolysegrad von ≥ 92 Mol-%, bezogen auf das Gesamtgewicht der Polyvinylalkohole, und
einen Anteil an Partikeln mit Partikeldurchmessern von ≥ 50 µm zu ≤ 150 ppm enthalten und
bei einem Feststoffgehalt von 50% in Wasser eine Viskosität von ≤ 40000 mPas (Bestimmung mit einem Brookfield Viskosimeter bei 20 Upm und 23°C) haben.

9. Verwendung der Polyvinylalkohol-stabilisierten Polymerisate aus Anspruch 8 als oder in Klebemittel für die Verklebung unterschiedlicher Substrate, insbesondere von cellulosischen Materialien, wie Papier, Pappe, Holz oder Baumwolle, oder Kunststoffen, wie Polyethylen , Polyvinylchlorid, Polyamid, Polyester , Polystyrol oder Acrylnitril-Butadien-Styrol.

## Claims

1. Process for preparing polyvinyl alcohol-stabilized polymers by radically initiated emulsion polymerization of one or more ethylenically unsaturated monomers, **characterized in that**
40 to 100 wit% of polyvinyl alcohols having a degree of hydrolysis of ≥ 92 mol%, based on the total weight of the amount of polyvinyl alcohol used overall in the emulsion polymerization, is used and
one or more polyvinyl alcohols having a degree of hydrolysis of ≥ 92 mol% are metered in by pulse feed during the emulsion polymerization,
a pulse feed lasting for ≤ 3% of the total duration of the emulsion polymerization.

2. Process for preparing polyvinyl alcohol-stabilized polymers according to Claim 1, **characterized in that** 4 to 50 wt% of polyvinyl alcohol is metered in by pulse feed, based on the total weight of the amount of polyvinyl alcohol used overall in the emulsion polymerization.

3. Process for preparing polyvinyl alcohol-stabilized polymers according to Claim 1 to 2, **characterized in that** at the time of the first pulse feed of polyvinyl alcohol, the total amount of the ethylenically unsaturated monomers introduced as an initial charge and metered in up to that point in time is 20 to 80 wt%, based on the total weight of the ethylenically unsaturated monomers used overall in the emulsion polymerization.

4. Process for preparing polyvinyl alcohol-stabilized polymers according to Claim 1 to 3, **characterized in that** one or more hydrophobically modified polyvinyl alcohols having a degree of hydrolysis of ≥ 92 mol% are metered in by pulse feed during the emulsion polymerization, the hydrophobically modified polyvinyl alcohols being saponification products of copolymers of vinyl acetate and hydrophobic comonomers selected from the group consisting of vinyl esters of saturated carboxylic acids having 3 to 15 C atoms, dialkyl maleates, dialkyl fumarates, vinyl chloride, vinyl alkyl ethers and olefins.

5. Process for preparing polyvinyl alcohol-stabilized polymers according to Claim 1 to 4, **characterized in that** additionally one or more polyvinyl alcohols having a degree of hydrolysis of < 92 mol% are metered in by pulse feed.

6. Process for preparing polyvinyl alcohol-stabilized polymers according to Claim 1 to 5, **characterized in that** one or more ethylenically unsaturated monomers are selected from the group consisting of vinyl esters, (meth)acrylic esters, vinyl aromatics, olefins, 1,3-dienes and vinyl halides.

7. Process for preparing polyvinyl alcohol-stabilized polymers according to Claim 1 to 6, **characterized in that** the volume fraction of the polyvinyl alcohol-stabilized polymers having particle diameters ≥ 2 µm is < 40 vol% (as determined with the Beckmann Coulter^{®} LS instrument in accordance with ISO 13320).

8. Polyvinyl alcohol-stabilized polymers obtainable by the processes according to Claim 7, **characterized in that**
the polyvinyl alcohol-stabilized polymers comprise 40 to 100 wt% of polyvinyl alcohols having a degree of hydrolysis of ≥ 92 mol%, based on the total weight of the polyvinyl alcohols, and comprise a fraction of particles having particle diameters of ≥ 50 µm at ≤ 150 ppm, and
at a solids content of 50%, have a viscosity in water of ≥ 40 000 mPas (as determined with a Brookfield viscometer at 20 rpm and 23°C).

9. Use of the polyvinyl alcohol-stabilized polymers from Claim 8 as or in adhesive bonding compositions for bonding various substrates, especially cellulosic materials, such as paper, card, wood or cotton, or plastics, such as polyethylene, polyvinyl chloride, polyamide, polyester, polystyrene or acrylonitrile-butadienestyrene.

## Revendications

1. Procédé de fabrication de polymères stabilisés par des alcools polyvinyliques par polymérisation en émulsion initiée radicalairement d'un ou de plusieurs monomères éthyléniquement insaturés, **caractérisé en ce que**
40 à 100 % en poids d'alcools polyvinyliques ayant un degré d'hydrolyse ≥ 92 % en moles, par rapport au poids total de la quantité d'alcool polyvinylique utilisée au total lors de la polymérisation en émulsion, sont utilisés, et
un ou plusieurs alcools polyvinyliques ayant un degré d'hydrolyse ≥ 92 % en moles sont ajoutés par dosage pulsé pendant la polymérisation en émulsion,
un dosage pulsé durant ≤ 3 % de la durée totale de la polymérisation en émulsion.

2. Procédé de fabrication de polymères stabilisés par des alcools polyvinyliques selon la revendication 1, **caractérisé en ce que** 4 à 50 % en poids d'alcools polyvinyliques sont ajoutés par dosage pulsé, par rapport au poids total de la quantité d'alcools polyvinyliques utilisée au total lors de la polymérisation en émulsion.

3. Procédé de fabrication de polymères stabilisés par des alcools polyvinyliques selon les revendications 1 à 2, **caractérisé en ce qu'**au moment du premier dosage pulsé d'alcool polyvinylique, la quantité totale des monomères éthyléniquement insaturé chargés et ajoutés jusqu'à ce moment est de 20 à 80 % en poids, par rapport au poids total des monomères éthyléniquement insaturés utilisés au total lors de la polymérisation en émulsion.

4. Procédé de fabrication de polymères stabilisés par des alcools polyvinyliques selon les revendications 1 à 3, **caractérisé en ce qu'**un ou plusieurs alcools polyvinyliques modifiés hydrophobiquement ayant un degré d'hydrolyse ≥ 92 % en moles sont ajoutés pendant la polymérisation en émulsion par dosage pulsé, les alcools polyvinyliques modifiés hydrophobiquement étant des produits de saponification de copolymères d'acétate de vinyle et de comonomères hydrophobes choisis dans le groupe comprenant les esters de vinyle d'acides carboxyliques saturés de 3 à 15 atomes C, les maléinates de dialkyle, les fumarates de dialkyle, le chlorure de vinyle, les éthers de vinyle et d'alkyle, et les oléfines.

5. Procédé de fabrication de polymères stabilisés par des alcools polyvinyliques selon les revendications 1 à 4, **caractérisé en ce qu'**un ou plusieurs alcools polyvinyliques ayant un degré d'hydrolyse < 92 % en moles sont en outre ajoutés par dosage pulsé.

6. Procédé de fabrication de polymères stabilisés par des alcools polyvinyliques selon les revendications 1 à 5, **caractérisé en ce qu'**un ou plusieurs monomères éthyléniquement insaturés sont choisis dans le groupe comprenant les esters de vinyle, les esters de l'acide (méth)acrylique, les composés aromatiques de vinyle, les oléfines, les 1,3-diènes et les halogénures de vinyle.

7. Procédé de fabrication de polymères stabilisés par des alcools polyvinyliques selon les revendications 1 à 6, **caractérisé en ce que** la proportion en volume des polymères stabilisés par des alcools polyvinyliques ayant des diamètres de particules ≥ 2 µm est < 40 % en volume (détermination avec l'appareil de mesure Beckmann Coulter^{®} LS selon ISO 13320).

8. Polymères stabilisés par des alcools polyvinyliques pouvant être obtenus par le procédé selon la revendication 7, **caractérisés en ce que** les polymères stabilisés par des alcools polyvinyliques contiennent 40 à 100 % en poids d'alcools polyvinyliques ayant un degré d'hydrolyse ≥ 92 % en moles par rapport au poids total des alcools polyvinyliques, et
une proportion de particules ayant des diamètres de particules de ≥ 50 µm à ≤ 150 ppm, et
présentent à une teneur en solides de 50 % dans de l'eau une viscosités ≤ 40 000 mPas (détermination avec un viscosimètre de Brookfield à 20 tours/minute et 23 °C).

9. Utilisation des polymères stabilisés par des alcools polyvinyliques selon la revendication 8 en tant que ou dans des adhésifs pour le collage de différents substrats, notamment de matériaux cellulosiques, tels que le papier, le carton, le bois ou le coton, ou de plastiques, tels que le polyéthylène, le polychlorure de vinyle, le polyamide, le polyester, le polystyrène ou l'acrylonitrile-butadiène-styrène.
